**Europäisches Patentamt**

**European Patent Office**

**Office européen des brevets**

(19)

(11) Veröffentlichungsnummer: **0 297 208 B1**

# (12) EUROPÄISCHE PATENTSCHRIFT

(45) Veröffentlichungstag der Patentschrift:
22.05.91 Patentblatt 91/21

(51) Int. Cl.$^5$: **C07C 309/31**

(21) Anmeldenummer: **88103426.8**

(22) Anmeldetag: **05.03.88**

---

(54) **Verfahren zur Herstellung von basischen Magnesumdialkylbenzolsulfonaten.**

---

(30) Priorität: **14.03.87 DE 3708339**

(43) Veröffentlichungstag der Anmeldung:
**04.01.89 Patentblatt 89/01**

(45) Bekanntmachung des Hinweises auf die
Patenterteilung:
**22.05.91 Patentblatt 91/21**

(84) Benannte Vertragsstaaten:
**BE DE ES FR GB IT NL**

(56) Entgegenhaltungen:
**EP-A- 0 005 337**
**GB-A- 2 123 021**
**LU-A- 53 755**

(73) Patentinhaber: **WINTERSHALL
AKTIENGESELLSCHAFT
Postfach 10 40 20 Friedrich-Ebert-Strasse 160
W-3500 Kassel (DE)**

(72) Erfinder: **Segnitz, Adolph, Dr.
Weimarer Strasse 13
W.4530 Ibbenbueren (DE)**
Erfinder: **Hovestadt, Alfred, Dr.
Rudolf-Virchow-Strasse 21
W-4530 Ibbenbueren (DE)**

(74) Vertreter: **Kinzel, Klaus, Dr. et al
BASF Aktiengesellschaft Patentabteilung ZSP
- C 6 Carl-Bosch-Strasse 38
W-6700 Ludwigshafen (DE)**

1. Herstellen der öllöslichen Dialkylbenzolsulfonsäuren durch Sulfonierung der Dialkylbenzole nach bekannten Verfahren, z.B. mit gasförmigem Schwefeltrioxid, Oleum oder Chlorsulfonsäure (Literatur : A. Davidsohn u. B.M. Milwidsky, "Synthetic Detergents", 6. Edition, 1978, S. 108 ff., Georg Godwin Limited, London, John Wiley & Sons, New York)

2. Herstellen der zu carbonisierenden Reaktionsmischung durch Mischung der einzelnen Komponenten, d.h. der Reaktionspartner Sulfonsäure und Magnesiumbase, Promoter, Lösungs- und Verdünnungsmittel, Alkohol und Wasser

3. Einleiten von Kohlendioxid (Carbonisieren) in diese Reaktionsmischung

4. Entfernen der Festprodukte durch Zentrifugieren und/oder Filtrieren

5. Abdestillieren und Rückgewinnung der flüchtigen Bestandteile durch Destillation.

Die vorliegende Erfindung hat im einzelnen einen einfachen Einstufenprozeß zum Gegenstand, der ausgehend von der Sulfonsäure, in einem Eintopfverfahren schnell und wirtschaftlich durchgeführt werden kann.

Die zu carbonisierende Reaktionsmischung enthält :

(a) eine öllösliche Sulfonsäure

(b) einen Kohlenwasserstoff als Lösungsmittel, z.B. Heptan, Hexan, Isooctan, Benzin, Petrolether, Toluol,

(c) als Promotor, ein Amin oder Gemische von Aminen

(d) einen Überschuß an Magnesiumbase (vorzugsweise Magnesiumoxid)

(e) ein Verdünnungsöl, d.h. ein neutrales Mineralöl geeigneter Viskosität

(f) einen $C_1$- bis $C_5$-Alkohol, vorzugsweise Methanol

(g) und Wasser.

Wir haben gefunden, daß bei der von uns als vorteilhaft ermittelten Kombination von Parametern die Carbonisierung bei einer Temperatur bis zu 45°C Produkte mit bersonders hoher Basenzahl und relativ niedriger Viskosität ergibt. Ein Temperaturanstieg auf 50°C oder darüber ist zu vermeiden, da dabei instabile Dispersionen entstehen und die Viskosität des Endprodukts stark ansteigt.

Die Reihenfolge der Zugabe der Komponenten der zu carbonisierenden Reaktionsmischung bei dem erfindungsgemäßen Verfahren ist nicht kritisch für die Herstellung der basischen Sulfonate. Wir bevorzugen jedoch die Zugabe des Promoters vor der Umsetzung mit Magnesiumbase, da höhere Basenzahlen leichter erreicht werden und die Viskosität des Endproduktes niedriger ist.

Das Molverhältnis der Metallbase zur Sulfonsäure ist für die Höhe der Basenzahl maßgebend. Bei Basenzahlen von 300 ist ein Molverhältnis Sulfonsäure zu Magnesiumoxid von 1 zu 6 notwendig, während bei Basenzahlen um 500 das Molverhältnis 1 zu 10 beträgt.

Die Menge des Kohlenwasserstoffs, vorzugsweise Heptan, beeinflußt die Effektivität der Carbonisierung sowie die Zentrifugierbarkeit und Filtrierbarkeit der Reaktionsmischung. Wir bevorzugen die ungefähr zwei- bis vierfache Menge Heptan, bezogen auf eingesetzte Menge Sulfonsäure.

Die Menge des Promoters beträgt in der Regel 0,1 bis 1,0 Mol Amin/Mol Sulfonsäure ; sie variiert jedoch mit der Art des Promoters und ist beim Ethylendiamin zweckmäßig etwa 0,4 bis 0,6, vorzugsweise 0,5 Mol, beim Triethanolamin etwa 0,25 bis 0,4, vorzugsweise 0,3 Mol pro Mol Sulfonsäure.

Die Art des Verdünnungsöls beeinflußt die Viskosität des Endprodukts. Mit der Menge des Verdünnungsöls in bezug auf die eingesetzte Sulfonsäure kann die Basenzahl und der Seifengehalt des Endproduktes eingestellt werden. Basenzahlen um 320 bei einem Seifengehalt von 22% erreicht man z.B. bei einem Verhältnis von 65 Teilen Verdünnungsöl (inclusive des unsulfierten Anteils der rohen Sulfonsäure) zu 35 Teilen Sulfonsäure. Bei Basenzahlen um 500 setzt man beispielsweise 55 Teile Verdünnungsöl auf 45 Teile Sulfonsäure ein. Als Verdünnungsöl benutzt man zweckmäßig ein Neutralöl der Viskosität 14 mm²/s bei 50°C. Je nach dem gewünschten Einsatzzweck kommen aber auch andere Neutralöle mit höheren oder niedrigeren Viskositäten in Betracht. Ebenso können auch geeignete synthetische Öle eingesetzt werden. So eignen sich z.B. sehr gut Dialkylbenzole und Diphenylalkane der Kettenlänge $C_{10}$ bis $C_{14}$ als Verdünnungsöle. Diese Syntheseprodukte entstehen bei der Herstellung von linearen Alkylbenzolen für die Waschmittelindustrie als Nebenprodukte.

Das Verhältnis Wasser : Magnesiumoxid beträgt im allgemeinen 2,0 bis 2,3 zu 1 (M/M). Es können aber auch andere Molverhältnisse eingesetzt werden.

Methanol wird in der Regel im Molverhältnis 0,5 bis 2 (Mole Methanol) zu 1 (Mol Magnesiumoxid) eingesetzt. Es können aber auch andere Molverhältnisse gewählt werden.

Die Menge des eingeleiteten Kohlendioxids richtet sich nach der eingesetzten Menge Magnesiumoxid ; sie beträgt meist 1 Mol Kohlendioxid auf 0,7 bis 1,6 Mole Magnesiumoxid. Im allgemeinen leitet man so lange Kohlendioxid in die zu carbonisierende Reaktionsmischung ein, bis die gewünschte Basenzahl erreicht ist. Zur Überprüfung der Basenzahl werden z.B. während der Carbonisierung jeweils einige Milliliter Reaktionsmischung entnommen, zentrifugiert, die flüchtigen Bestandteile abdestilliert und die Basenzahl der klaren, basischen Magnesiumsulfonat-Lösung fortlaufend bestimmt. Sobald die gewünschte Basenzahl erreicht ist, wird die Carbonisierung unterbrochen und der Reaktionsansatz durch Zentrifugieren oder Filtrieren und Abdestillieren der flüchtigen Bestandteile unter gleichzeitiger Rückgewinnung des Methanols und Heptans aufgearbeitet. Es werden hellgelbe bis braungelbe, klare Konzentrate der basischen Sulfonate in Öl mit hoher thermischer Stabilität erhalten.

Die Produkte sind in allen üblichen Mineralölen sowie auch in vielen synthetischen Ölen, wie beispielsweise Diphenylalkanen oder Dialkylbenzolen, ausgezeichnet löslich.

Die Sulfonate sind verträglich mit anderen herkömmlichen Additiven für Schmieröle. Sie können problemlos in Kombination mit anderen aschegebenden Detergents, aschefreien Dispersants, Viskositätsindex-Verbesserern, Extreme Pressure-Additiven, Stockpunktverbesserern, Antioxidantien und Entschäumern eingesetzt werden.

An den folgenden Beispielen wird das erfindungsgemäße Verfahren näher erläutert.

Beispiel 1

Überbasisches Magnesiumsulfonat der Basenzahl 320 mg KOH/g

Die mit Heptan im Gewichtsverhältnis 1 : 1 extrahierte rohe Sulfonsäure (enthält im wesentlichen Dialkylbenzolsulfonsäure des mittleren Molgewichts 480 ; Kettenlänge der Alkylgruppen C 10 bis C 14) wird mit Calciumcarbonat (1,1 Mol pro Mol Schwefelsäure) eine Stunde bei ca. 50°C gerührt, um Spuren von Säuren wie Schwefelsäure und wasserlösliche Sulfonsäuren zu neutralisieren und andere Verunreinigungen zu adsorbieren. Die resultierenden Festsubstanzen (Calciumsulfat, Calciumsalze der Sulfonsäuren der Diphenylalkane, Calciumcarbonat und andere) werden abfiltriert. Die so gereinigte Sulfonsäurelösung in Heptan enthält im wesentlichen öllösliche Dialkylbenzolsulfonsäure, etwas unsulfiertes Dialkylbenzol sowie Spuren Schwefelsäure.

2051 g dieser Lösung (enthält 907,8 g = 1,89 Mol Dialkylbenzolsulfonsäure, 88,1 g Unsulfiertes, 5,0 g Schwefelsäure und 1050,1 g Heptan) wird in einen Rührwerksreaktor mit Kühlmöglichkeit und Innentemperatur-Messung gegeben. Als Promoter werden 45,4 g (0,76 Mol) Ethylendiamin zugesetzt. Dabei steigt die Temperatur der Mischung von Raumtemperatur auf ca. 55°C an. 457,3 g (11,35 Mol) frisch geglühtes Magnesiumoxid (geglüht bei 500°C) werden rasch zugefügt und 1597,8 g Verdünnungsöl (Neutralöl leicht, Raffinationsgrad A, Viskosität 14 mm²/s bei 50°C), 1068 g Heptan, 431,2 g (13,48 Mol) Methanol und 469,8 g (26,1 Mol) Wasser werden zügig zugegeben. Dabei fällt die Temperatur der Mischung auf ca. 30°C.

Anschließend wird mit der Carbonisierung begonnen. Beim Einleiten von Kohlendioxid steigt die Temperatur auf 42°C an (man läßt die Temperatur höchstens auf 45°C kommen und drosselt dann die Einleitungsgeschwindigkeit oder kühlt). Kohlendioxid wird mit einer Rate von 40 Litern pro Stunde unter Rühren (Rührgeschwindigkeit 400 Umdrehungen pro Minute) so lange eingeleitet, bis die gewünschte Basenzahl erreicht ist (5 Stunden und 40 Minuten ; Gesamtmenge an Kohlendioxid 226,7 Liter = 445,3 g = 10,12 Mol). Man zentrifugiert (Rückstand 69 g) und destilliert die flüchtigen Bestandteile ab. Die organischen Destillate werden wieder zurückgewonnen und erneut eingesetzt. Das Konzentrat wird über Papierfilter oder Karton filtriert.

Die Gesamtausbeute beträgt 3610 g. Die Basenzahl (Total base number, TBN) beträgt 320 mg KOH/g.

Die Daten des Produkts sind in der folgenden Tabelle 1 zusammengestellt.

Tabelle 1 : Überbasisches Magnesiumsulfonat der Basenzahl 320

| | |
|---|---|
| Aussehen | hellgelb, klar |
| Basenzahl, TBN, mg KOH/g | 320 |
| Dichte bei 15°C, g/cm³ | 1,082 |
| Viskosität bei 50°C, mm²/s | 336 |
| Viskosität bei 100°C, mm²/s | 49,8 |
| Magnesium, Gew.% | 7,4 |
| Mineralölgehalt, Gew.% | 45,5 |
| Additivgehalt, Gew.% | 54,5 |
| davon Seife, Gew.% | 22,5 |
| Molgewicht der Sulfonsäure | 480 |
| Löslichkeit in Neutralöl | klar löslich |
| Höchsttemperatur bei Dauerlagerung 70°C | |

Beispiel 2

Überbasisches Magnesiumsulfonat der Basenzahl 411 mg KOH/g

Man verfährt wie in Beispiel 1 beschrieben, verwendet jedoch folgenden Ansatz :

```
333      g Sulfonsäurelösung in Heptan enthalten:
             147,4 g (0,307 Mol) Dialkylbenzolsulfonsäure
              11,7 g Unsulfiertes
               0,7 g Schwefelsäure
             173,2 g Heptan
  8,8    g (0,15 Mol) Ethylendiamin als Promoter
 98,2    g (2,44 Mol) Magnesiumoxid
210      g Verdünnungsöl (Neutralöl der Viskosität 14 mm²/s bei 50°C
170,8    g zusätzliches Heptan
 94,3    g (2,95 Mol) Methanol
102      g (5,67 Mol) Wasser
 60      Liter = 117,9 g (2,68 Mol) Kohlendioxid
Einleitungszeit: 90 Minuten
Gesamtausbeute: 548 g
Aussehen: hellgelb, klar
Basenzahl, TBN: 411 mg KOH/g
```

Beispiel 3

Überbasisches Magnesiumsulfonat der Basenzahl 480 mg KOH/g

Man verfährt wie in Beispiel 1 angegeben, verwendet jedoch folgenden Ansatz :

```
333      g Sulfonsäurelösung in Heptan enthalten:
             147,4 g (0,307 Mol) Dialkylbenzolsulfonsäure
              11,7 g Unsulfiertes
               0,7 g Schwefelsäure
             173,2 g Heptan
  8,8    g (0,15 Mol) Ethylendiamin als Promoter
122,8    g (3,05 Mol) Magnesiumoxid
210      g Verdünnungsöl (Neutralöl der Viskosität 14 mm²/s bei 50°C
341,8    g zusätzliches Heptan
118      g (3,68 Mol) Methanol
127      g (7,06 Mol) Wasser
 54      Liter = 106,1 g (2,41 Mol) Kohlendioxid
Einleitungszeit: 81 Minuten
Gesamtausbeute: 570 g
Aussehen: hellgelb, klar
Basenzahl, TBN: 480 mg KOH/g
```

Beispiel 4

Überbasisches Magnesiumsulfat der Basenzahl 366 mg KOH/g

Man verfährt wie in Beispiel 1 beschrieben, verwendet jedoch folgenden Ansatz :

```
383     g Sulfonsäurelösung in Heptan enthalten:
               147,4 g (0,307 Mol) Dialkylbenzolsulfonsäure
                28,5 g Unsulfiertes
               keine   Schwefelsäure
               207,1 g Heptan
 14,7   g (0,099 Mol) Triethanolamin als Promoter
122,8   g (3,05 Mol) Magnesiumoxid
193     g Verdünnungsöl (Neutralöl der Viskosität 14 mm²/s bei 50°C)
307,8   g zusätzliches Heptan
118     g (3,68 Mol) Methanol
127     g (7,06 Mol) Wasser


  88,7  Liter = 174,2 g (3,96 Mol) Kohlendioxid
  Einleitungszeit: 133 Minuten
  Gesamtausbeute: 436 g
  Aussehen: hellgelb, klar
  Basenzahl, TBN: 366 mg KOH/g
```

## Ansprüche

1. Verfahren zur Herstellung von basischen Magnesiumdialkylbenzolsulfonaten durch Carbonisierung eines Magnesiumdialkylbenzolsulfonats, d.h. Umsetzen mit Kohlendioxid in Gegenwart eines Überschusses an Magnesiumbase und einem Promotor in einem Medium enthaltend ein Mineralöl oder synthetisches Öl, ein Kohlenwasserstofflösungsmittel, einen $C_1$-$C_5$-Alkohol und Wasser, dadurch gekennzeichnet, daß man
   a) als Sulfonsäure Dialkylbenzolsulfonsäure mit n-paraffinischen Seitenketten von 10 bis 14 Kohlenstoffatomen
   b) als Promotor Amine mit 2 bis 20 Kohlenstoffatomen verwendet und
   c) das Einleiten des Kohlendioxids bei einer Temperatur unterhalb 50°C in einem einstufigen Verfahren durchführt bis die gewünschte Basenzahl erreicht ist und anschließend das Gemisch in an sich bekannter Weise durch Abtrennen des Sediments und Abdestillieren der Lösungsmittel aufarbeitet.

2. Verfahren gemäß Anspruch 1, dadurch gekennzeichnet, daß man als Promotoren Alkanolamine oder Polyamine verwendet.

3. Verfahren gemäß Anspruch 1, dadurch gekennzeichnet, daß man als Promotor Ethylendiamin verwendet.

4. Verfahren gemäß Anspruch 1, dadurch gekennzeichnet, daß man als Promotor Triethanolamin verwendet.

5. Verfahren gemäß Anspruch 1, dadurch gekennzeichnet, daß man den Promotor der Sulfonsäure vor der Magnesiumbase-Zugabe zusetzt.

**Claims**

1. A process for the preparation of a basic magnesium dialkylbenzenesulfonate by carbonization of a magnesium dialkylbenzenesulfonate, ie. reaction with carbon dioxide in the presence of an excess of a magnesium base and a promoter in a medium containing a mineral oil or synthetic oil, a hydrocarbon solvent, a $C_1$-$C_5$-alcohol and water, wherein

a) the sulfonic acid used is a dialkylbenzenesulfonic acid having n-paraffinic side chains of 10 to 14 carbon atoms,

b) the promoter used is an amine of 2 to 20 carbon atoms and

c) carbon dioxide is passed in at below 50°C in a one-stage process until the desired base number is reached and the mixture is then worked up in a conventional manner by separating off the sediment and distilling off the solvents.

2. A process as claimed in claim 1, wherein the promoter used is an alkanolamine or a polyamine.

3. A process as claimed in claim 1, wherein the promoter used is ethylenediamine.

4. A process as claimed in claim 1, wherein the promoter used is triethanolamine.

5. A process as claimed in claim 1, wherein the promoter is added to the sulfonic acid before the addition of the magnesium base.

**Revendications**

1. Procédé de préparation de dialkylbenzènesulfonates de magnésium basiques par carbonatation d'un dialkylbenzènesulfonate de magnésium, c'est-à-dire par réaction avec l'anhydride carbonique en présence d'un excès de base de magnésium et d'un promoteur dans un milieu contenant, une huile minérale ou une huile synthétique, un solvant hydrocarbone, un alcool en $C_1$-$C_5$ et de l'eau, caractérisé en ce que

a) on utilise, en tant qu'acide sulfonique, des acides dialkylbenzènesulfoniques renfermant des chaînes latérales n-paraffiniques à 10-14 atomes de carbone,

b) on utilise, en tant que promoteur, des amines à 2-20 atomes de carbone et

c) on envoie l'anhydride carbonique à une température inférieure à 50°C, en un procédé en une seule étape, jusqu'à ce que l'indice de base désiré soit atteint, puis on traite le mélange de façon en soi connue par séparation du sédiment et élimination du solvant par distillation.

2. Procédé selon la revendication 1, caractérisé en ce qu'on utilise, en tant que promoteurs, des alcanolamines ou des polyamines.

3. Procédé selon la revendication 1, caractérisé en ce qu'on utilise, en tant que promoteur, de l'éthylènediamine.

4. Procédé selon la revendication 1, caractérisé en ce qu'on utilise, en tant que promoteur, de la triéthanolamine.

5. Procédé selon la revendication 1, caractérisé en ce qu'on ajoute le promoteur à l'acide sulfonique avant la base de magnésium.